## Europäisches Patentamt

## European Patent Office

## Office européen des brevets

(11) Veröffentlichungsnummer: **0 252 068**
**A2**

(12) # EUROPÄISCHE PATENTANMELDUNG

(21) Anmeldenummer: **87890145.3**

(22) Anmeldetag: **29.06.87**

(51) Int. Cl.³: **B 62 D 55/253**
**B 62 D 55/20**

(30) Priorität: **30.06.86 AT 1765/86**

(43) Veröffentlichungstag der Anmeldung:
**07.01.88 Patentblatt 88/1**

(84) Benannte Vertragsstaaten:
**AT CH DE FR IT LI SE**

(71) Anmelder: **Bombardier-Rotax-Wien Produktions- und Vertriebsgesellschaft m.b.H.**
**Donaufelder Strasse 73-79**
**A-1211 Wien(AT)**

(72) Erfinder: **Ranner, Dietrich, Dipl.-Ing.**
**Schwaighofen-Egg**
**A-5301 Eugendorf Salzburg(AT)**

(74) Vertreter: **Krause, Ernst, Dipl.-Ing. et al,**
**Dipl.- Ing. Krause, Ernst Dipl. Ing. Casati, Wilhelm**
**Patentanwälte Amerlingstrasse 8**
**A-1061 Wien(AT)**

(54) Bandraupe.

(57) Die Erfindung betrifft eine Raupe, bestehend aus Stegen 5, die an parallel zueinander angeordneten Gurten 1 - 4 mittels Schrauben befestigt sind. Die Gurten sind dabei entlang eines Randes 7, 8 mit Seitenführungsstollen 6 versehen, die mit Führungsrädern 24 zusammenwirken und eine seitliche Verschiebung der Stege 5 der Raupe vermeiden.

*Fig. 1*

*Fig. 2*

EP 0 252 068 A2

Raupe     BEZEICHNUNG GEÄNDERT
siehe Titelseite

Die Erfindung betrifft eine Raupe, insbes. Pistenfahrzeugraupe, mit an parallel zueinander angeordneten Gurten, insbes. Gummigurten, befestigten Stegen und mit der Raupe verbundenen Seitenführungselementen, die in zwei zueinander parallelen Reihen, bevorzugt im Mittelbereich, symmetrisch zur Längsmittenebene der Raupe angeordnet sind.

Bei bekannten Raupen der vorgenannten Art sind die Seitenführungselemente als Metallbügel ausgebildet und mit jedem der Stege sind zwei Bügel verschraubt. Im Betrieb haben sich dabei unter extremen Beanspruchungen Schwierigkeiten für die Raupenführung ergeben, da sich die beiden Seitenführungselemente deformierten bzw. überhaupt zu Bruch gingen, womit dann die Raupe seitlich ausweichen konnte und keine gerade Führung der Raupe mehr gegeben war.

Der Erfindung liegt die Aufgabe zugrunde, diesem Übelstand abzuhelfen, zu welchem Zwecke vorgeschlagen wird, daß erfindungsgemäß eine Reihe der Seitenführungselemente als Stollen auf einem Gurt ausgebildet und entlang eines Randstreifens des Gurtes angeordnet sind und daß die zweite Reihe von Seitenführungselementen auf einem weiteren Gurt, ebenfalls entlang eines Randstreifens dieses Gurtes ausgebildet ist, wobei die die Seitenführungsstollen aufweisenden Gurte mit den die Stollen aufweisenden Rändern einander zugekehrt angeordnet sind.

Durch die erfindungsgemäße Maßnahme wird eine Verbesserung der Haltbarkeit der Seitenführungselemente erreicht, da diese direkt mit dem Gurt verbunden sind und daher mit diesem eine Einheit bilden. Darüberhinaus wird eine Vereinfachung der Montage und Lagerhaltung erzielt, da mit der Gurtmontage gleichzeitig auch die Montage der Seitenführungselemente erfolgt, ohne daß dabei gesonderte Mittel für die Seitenführung befestigt werden müßten.

Als günstig kann es sich erweisen, wenn in weiterer Ausgestaltung der Erfindung die Seitenführungsstollen der Raupe im Bereich zwischen den Stegen der Raupe angeordnet sind, wobei im Bereich des Gurtenschlosses, der Seitenführungsstollen entfernt ist. Durch diese spezielle Anordnung der Seitenführungsstollen wird eine etwaige Behinderung der Montage der Gurten auf den Stegen, insbes. Behinderungen beim Anziehen der Befestigungsschrauben, vermieden. Im Bereich des Gurtenschlosses ist dann der Seitenführungsstollen zu entfernen, um das Gurtenschloß einwandfrei montieren und eine sichere Verbindung der Gurtenden erzielen zu können.

In einer weiteren Ausgestaltungsform der erfindungsgemäßen Raupe kann vorgesehen werden, daß die von der Seitenführungsflanke des Seitenführungsstollens abgewandte Flanke an einem mit dem Steg verschraubten Stützschenkel anliegt, der bevorzugt von einer Abwinkelung einer mit dem Steg verschraubten, den Gurt auf den Steg niederhaltenden Klemmplatte gebildet ist. Bei dieser Ausgestaltung der erfindungsgemäßen Raupe wird der Seitenführungsstollen besonders günstig gegen die im Betrieb auftretenden Kräfte abgestützt und ein Abheben des Gurtes vom Steg im Bereich des Seitenführungsstollens hintangehalten.

In ähnlicher Weise kann dieser Effekt auch erreicht werden, wenn in besonderer, weiterer Ausgestaltung der erfindungsgemäßen Raupe, in den Stollenquerschnitt ein mit einer Gewindebohrung versehener Scheibenkörper einvulkanisiert ist, in den eine den Steg der Raupe durchsetzende Kopfschraube eingeschraubt ist. Bei dieser Ausführungsform ist es möglich, den Stollen mittels einer Kopfschraube, deren Schaft den Steg von unten durchsetzt, festzuhalten. Allerdings muß hiezu der Steg von der Seite zwecks Einführens der Kopfschraube zugänglich sein.

Zum Zwecke der Befestigung des Stollens kann jedoch auch in den Stollenquerschnitt ein Abschnitt einer mit dem Steg der Raupe verschraubten, den Gurt auf dem Steg niederhaltenden Klemmplatte einvulkanisiert sein. Ist dieser Abschnitt federnd ausgebildet, so kann der Stollenquerschnitt gegen den Steg niedergehalten werden, ähnlich wie wenn eine Blattfeder auf den Stollen von oben drücken würde. Es ist jedoch auch möglich, den in den Stollenquerschnitt einvulkanisierten Abschnitt der Klemmplatte mit einer Durchgangsbohrung zu versehen und durch diese Durchgangsbohrung dann den Schaft einer Kopfschraube hindurchzuführen, die in ein Muttergewinde des Steges der Raupe eingeschraubt ist oder eine Durchgangsbohrung des Steges der Raupe durchsetzt und in eine im Steg der
Raupe angeordnete Leiste od.dgl. eingeschraubt ist. Auf diese Art
und Weise wird der Stollen unmittelbar mit dem Steg verschraubt
und gegen diesen gepreßt.

Bei dieser Ausführungsform kann in weiterer Ausgestaltung der
Erfindung mit der Durchgangsbohrung, die sich in dem in den
Stollenquerschnitt einvulkanisierten Abschnitt der Klemmplatte befindet, eine ebenfalls in den Stollen einvulkanisierte Hülse
fluchtend angeordnet sein, die mit der Klemmplatte fest verbunden
ist, wobei die Stirnfläche der Hülse in einer von der freien oberen
Fläche des Stollens ausgehenden Aussparung des Stollens liegt.
Diese Ausführungsform ermöglicht eine leichte Zugänglichkeit des
Schraubenkopfes von der Oberseite des Stollens her.

Bei einem Raupenfahrzeug ist es zweckmäßig, die Raupen
derart anzuordnen, daß die Stütz- bzw. Führungsräder des Fahrzeuges mit ihren Seitenwänden zwischen die beiden Reihen der
Seitenführungsstollen ragen, wobei jedoch ein geringes seitliches
Spiel zu den Seitenführungsstollen belassen wird, um die Relativbewegungen zwischen Rad und Stollenflanke nicht wesentlich zu
behindern.

Die Erfindung wird nachstehend anhand von in der Zeichnung
dargestellten Ausführungsbeispielen näher erläutert. Es zeigen,

Fig. 1 einen Ausschnitt einer erfindungsgemäß ausgebildeten
Raupe, geschnitten in Richtung entlang der Linie I-I in Fig. 2.

Fig. 2 zeigt einen Schnitt entlang der Linie II-II in Fig. 1,
die

Fig. 3 bis 6 sowie 8 und 9 verschiedene Befestigungsmöglichkeiten für die Seitenführungsstollen am Steg, wobei Fig. 5 ein
Schnitt entlang Linie V-V in Fig. 6 ist.Fig. 7 zeigt einen Schnitt
entlang der Linie VII-VII in Fig. 5.

Fig. 10 veranschaulicht eine Draufsicht auf eine Ausführungsform einer erfindungsgemäß ausgebildeten Raupe.

Die erfindungsgemäße Raupe besteht aus Stegen 5, die an
parallel zueinander angeordneten Gurten 1 - 4 befestigt sind. Die
Gurten können dabei endlos, also in sich geschlossen, ausgebildet
werden oder aber kann zur Verbindung der Gurtenden auch ein

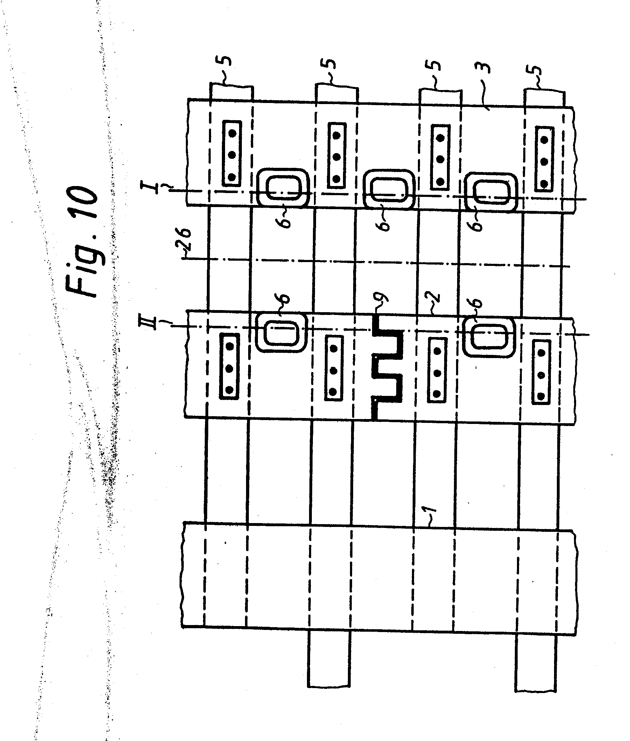

Gurtenschloß vorgesehen werden, wie ein solches in Fig. 10 dargestellt und dort mit 9 bezeichnet ist. Die Gurten 1 - 4 können aus Gummi bestehen.

Die Seitenführungselemente sind in zwei zueinander parallelen Reihen I, II angeordnet. Bevorzugt befinden sich die Seitenführungselemente im Mittelbereich der Raupe und sind dort symmetrisch zur Längsmittenebene 26 angeordnet. Eine Reihe I der Seitenführungselemente sind als Stollen 6 ausgebildet und auf einem Gurt 3 ausgebildet. Die Anordnung dieser Stollen erfolgt entlang eines Randstreifens 7 des vorgenannten Gurtes 3. Die zweite Reihe II von Seitenführungselementen ist auf einem weiteren Gurt 2 ebenfalls entlang eines Randstreifens 8 dieses Gurtes ausgebildet. Die Ränder 7, 8 der Gurte 2, 3 sind einander zugekehrt auf den Stegen 5 angeordnet.

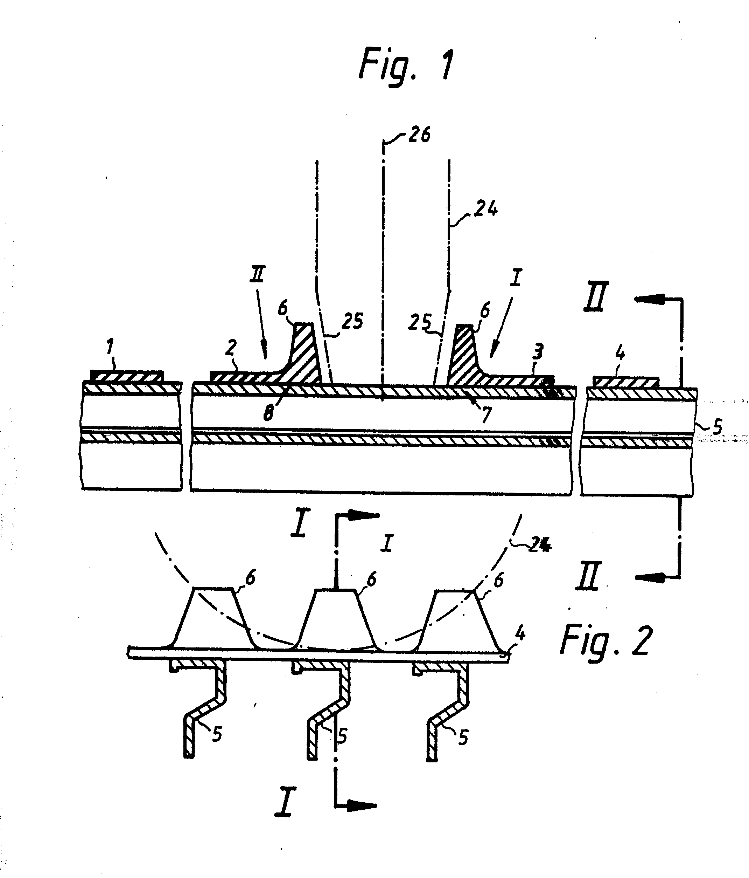

Eine mögliche Querschnittsform der Stege 5 ist aus Fig. 2 ersichtlich. Solche Stege können beispielsweise aus Stahl gefertigt werden.

Die Seitenführungsstollen 6 der Raupe können, wie dies beispielsweise Fig. 10 zeigt, im Bereich zwischen den Stegen 5 der Raupe angeordnet sein. Um hier Platz für ein Gurtenschloß 9 zu schaffen, sind an jener Stelle, an der das Gurtenschloß 9 angeordnet ist, Seitenführungsstollen 6 entfernt.

Die von der Seitenführungsflanke 11 des Seitenführungsstollens 6 abgewandte Flanke 12 liegt an einem mit dem Steg 5 verschraubten Stützschenkel 10 an. Dieser Schenkel 10 verhindert, daß im Falle der Stollen mit seiner Seitenführungsflanke 11 an einem der Führungsräder 24 anläuft, der Stollen 6 vom Steg 5 der Raupe abhebt, was die Seitenführung beeinträchtigen würde.

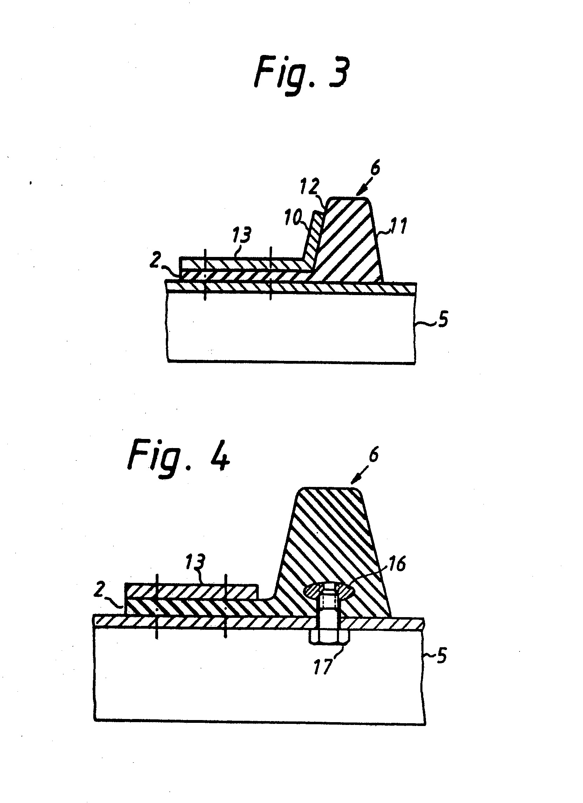

Bei dem dargestellten Ausführungsbeispiel gemäß Fig. 3 ist der Stützschenkel 10 von einer Abwinkelung einer mit dem Steg 5 verschraubten, den Gurt 2 auf dem Steg 5 niederhaltenden Klemmplatte 13 gebildet. Die Schrauben sind hiebei lediglich durch ihre Mittellinien symbolisiert.

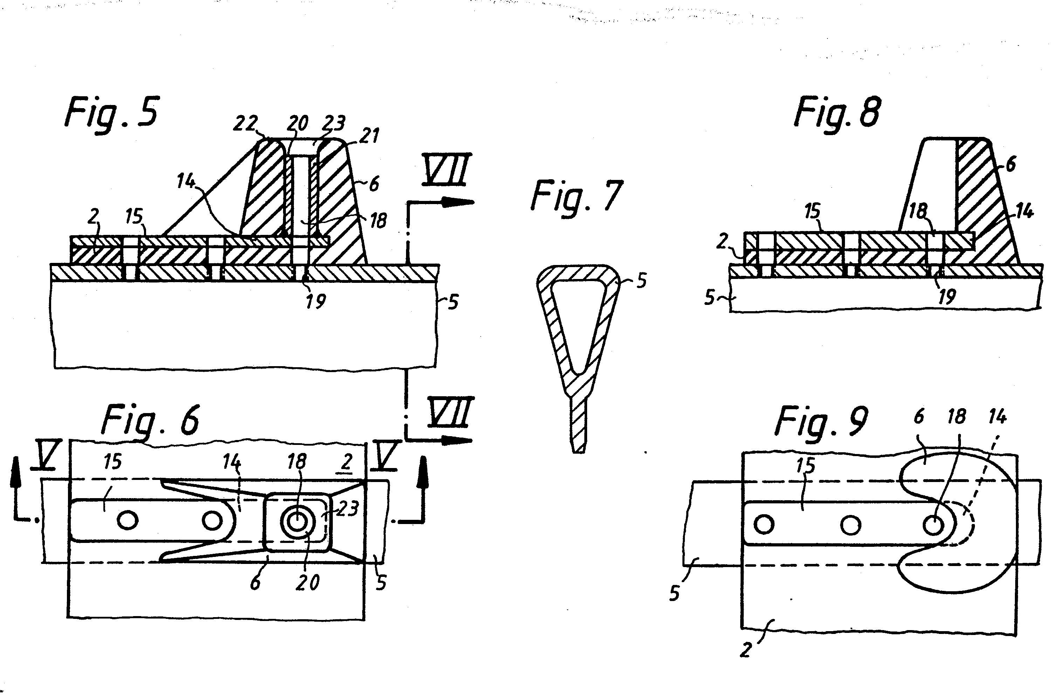

Gemäß den Fig. 5 - 9 ist in den Stollenquerschnitt ein Abschnitt 14 einer Klemmplatte 15 einvulkanisiert. Die Klemmplatte ist dabei mit dem Steg 5 der Raupe verschraubt, wobei die Klemmplatte 15 den Gurt gegen den Steg 5 drückt. Der Abschnitt 14 kann dabei auch Federeigenschaften aufweisen, u.zw. in der Weise, daß der jeweilige Stollen 6 gegen den Steg 5 der Raupe elastisch gedrückt wird.

In den Stollenquerschnitt kann jedoch auch, wie dies etwa Fig. 4 zeigt, ein mit einer Gewindebohrung versehener Scheibenkörper 16 einvulkanisiert werden. In die Gewindebohrung kann dann eine den Steg 5 der Raupe durchsetzende Kopfschraube 17 eingeschraubt werden. Diese Art der Halterung kann vor allem bei Stegen ausgeführt werden, deren Querschnitt ähnlich dem in Fig. 2 ersichtlichen Stegquerschnitt ausgebildet ist. Dieser Querschnitt ist von der Seite her offen, sodaß von dort die Schraube 17 eingeführt werden kann.

Der in den Stollenquerschnitt einvulkanisierte Abschnitt der Klemmplatte 15 kann jedoch auch mit einer Durchgangsbohrung 18 versehen sein, wobei dann durch diese Durchgangsbohrung 18 der Schaft einer Kopfschraube hindurchgeführt werden kann.Wie die Fig. 8 und 9 zeigen, besitzt der Seitenführungsstollen 6 dabei eine Aussparung in der von der Seitenführungsflanke 11 abgewandten Flanke 12. Der Kopf der Schraube kann dadurch einwandfrei von einem Schraubenschlüssel erfaßt werden, sodaß bei der Befestigung des Gurtes am Steg 5 keine Behinderung durch den vorhandenen Stollen auftritt.

Zur Durchgangsbohrung 18 ist in dem in den Fig. 5 und 6 dargestellten Ausführungsbeispiel eine Hülse 20 fluchtend angeordnet. Die Hülse 20 ist dabei z.B. durch Schweißung mit der Klemmplatte 15 fest verbunden. Klemmplatte 15 samt Hülse 20 werden dabei in den Stollenkörper 6 mit einvulkanisiert. Die Stirnfläche 21 der Hülse 20 liegt dabei in einer von der freien Oberfläche 22 des Stollens 6 ausgehenden Aussparung 23 des Stollens. Die Ausnehmung 23 dient zur Aufnahme des Schraubbolzens. Dieser Schraubbolzen wird in eine Gewindebohrung 19 des Steges 5 eingeschraubt. In diesem Falle kann der Steg auch einen geschlossenen Hohlquerschnitt aufweisen, wie ein solcher beispielsweise in Fig. 7 dargestellt ist. Derartige Stege werden bevorzugt in Leichtmetall, z.B. Aluminium, gefertigt und erreichen durch die geschlossene Querschnittsform ähnliche Festigkeitseigenschaften wie ein Steg gemäß Fig. 2, der beispielsweise aus Stahl besteht. In den Hohlraum des Stegquerschnittes (Fig. 7) kann auch vom jeweils offenen Ende her eine Leiste (nicht dargestellt) eingesetzt werden, die mit Gewindebohrungen für die Niederhalteschrauben des Gurtes (und der Stollen) versehen ist. Im Steg 5 sind dann entsprechend der Lage der Gewindebohrungen in der Leiste Durchgangsbohrungen zum Hindurchführen des Schaftes der Niederhalteschrauben angeordnet.

Die Raupe als solche ist am Fahrzeug so angeordnet, daß die Stütz- bzw. Führungsräder 24 des Fahrzeuges mit ihren Seitenwänden 25 zwischen die beiden Reihen I, II der Seitenführungsstollen 6 ragen. Zwischen den Seitenwänden 25 und den Seitenführungsstollen 6 wird ein geringes seitliches Spiel zugelassen. Solcherart werden durch die unterschiedlichen Geschwindigkeiten von Führungsrad 24 und Stollen 6 bedingte Reibungskräfte zwischen Seitenführungsrad 24 und Stollen 6 vermindert.

Patentansprüche:

1. Raupe, insbes. Pistenfahrzeugraupe, mit an parallel zueinander angeordneten Gurten, insbes. Gummigurten befestigten Stegen und mit der Raupe verbundenen Seitenführungselementen, die in zwei zueinander parallelen Reihen, bevorzugt im Mittelbereich, symmetrisch zur Längsmittenebene der Raupe angeordnet sind, dadurch gekennzeichnet, daß eine Reihe (I) der Seitenführungselemente als Stollen (6) auf einem Gurt (3) ausgebildet und entlang eines Randstreifens (7) des Gurtes (3) angeordnet sind und daß die zweite Reihe (II) von Seitenführungselementen auf einem weiteren Gurt (2), ebenfalls entlang eines Randstreifens (8) dieses Gurtes (2) ausgebildet ist, wobei die die Seitenführungsstollen (6) aufweisenden Gurte (2, 3) mit den die Stollen (6) aufweisenden Rändern (7, 8) einander zugekehrt angeordnet sind.

2. Raupe nach Anspruch 1, dadurch gekennzeichnet, daß die Seitenführungsstollen (6) der Raupe im Bereich zwischen den Stegen (5) der Raupe angeordnet sind, wobei im Bereich des Gurtenschlosses (9) der Seitenführungsstollen (6) entfernt ist (Fig. 10).

3. Raupe nach Anspruch 1, dadurch gekennzeichnet, daß die der Seitenführungsflanke (11) des Seitenführungsstollens (6) abgewandte Flanke (12) an einem mit dem Steg (5) verschraubten Stützschenkel (10) anliegt, der bevorzugt von einer Abwinkelung einer mit dem Steg (5) verschraubten, den Gurt (2) auf den Steg (5) niederhaltenden Klemmplatte (13) gebildet ist (Fig. 3).

4. Raupe nach Anspruch 1, dadurch gekennzeichnet, daß in den Stollenquerschnitt ein mit einer Gewindebohrung versehener Scheibenkörper (16) einvulkanisiert ist, in den eine den Steg (5) der Raupe durchsetzende Kopfschraube (17) eingeschraubt ist (Fig. 4).

5. Raupe nach Anspruch 1, dadurch gekennzeichnet, daß in den Stollenquerschnitt ein Abschnitt (14) einer mit dem Steg (5) der Raupe verschraubten, den Gurt (2) auf den Steg (5) niederhaltenden Klemmplatte (15) einvulkanisiert ist (Fig. 5 - 9).

6. Raupe nach Anspruch 5, dadurch gekennzeichnet, daß der in den Stollenquerschnitt einvulkanisierte Abschnitt (14) der Klemmplatte (15) mit einer Durchgangsbohrung (18) versehen ist und daß durch diese Durchgangsbohrung (18) der Schaft einer Kopfschraube hindurchgeführt ist, die in ein Muttergewinde (19) des Steges (5) der Raupe eingeschraubt ist oder eine Durchgangsbohrung des Steges der Raupe durchsetzt und in eine im Steg der Raupe angeordnete Leiste od.dgl. eingeschraubt ist (Fig. 5 - 9).

7. Raupe nach Anspruch 5 oder 6, dadurch gekennzeichnet, daß fluchtend mit der Durchgangsbohrung (18), die sich in dem in den Stollenquerschnitt einvulkanisierten Abschnitt (16) der Klemmplatte (15) befindet, eine ebenfalls in den Stollen (6) einvulkanisierte Hülse (20) angeordnet ist, die mit der Klemmplatte (15) fest verbunden ist, wobei die Stirnfläche (21) der Hülse (20) in einer von der freien oberen Fläche (22) des Stollens (6) ausgehenden Aussparung (23) des Stollens (6) liegt (Fig. 5, 6).

8. Raupenfahrzeug, insbes. Pistengerät, mit einer Raupe nach einem der Ansprüche 1 bis 7, dadurch gekennzeichnet, daß die Raupen so angeordnet sind, daß die Stütz- bzw. Führungsräder (24) des Fahrzeuges mit ihren Seitenwänden (25) zwischen die beiden Reihen (I, II) der Seitenführungsstollen (6) ragen, unter Belassung eines geringen seitlichen Spieles zu den Seitenführungsstollen (6) (Fig. 1, 2).

Fig. 1

Fig. 2

# Fig. 3

# Fig. 4

Fig. 5

22 20 23
21
14
6
18
2 15
19
5
VII

Fig. 6

V
15 14 18 2
V
23
6 20 5
VII

Fig. 7

5

Fig. 8

6
15 18 14
2
5 19

Fig. 9

6 18 14
15
5
2

-3/4-

0252068

Fig. 10